# EUROPEAN PATENT SPECIFICATION

(11) **EP 3 159 222 B1**
(45) Date of publication and mention of the grant of the patent: **12.12.2018**
(21) Application number: 16275150.7
(22) Date of filing: 04.10.2016
(51) Int. Cl.: B60R 16/037

(54) **A METHOD OF CONTROLLING AN ENTERTAINMENT SYSTEM OF A MOTOR VEHICLE**
VERFAHREN ZUR STEUERUNG EINES UNTERHALTUNGSSYSTEMS EINES KRAFTFAHRZEUGS
PROCÉDÉ DE COMMANDE D'UN SYSTÈME DE DIVERTISSEMENT D'UN VÉHICULE AUTOMOBILE

(30) Priority: 21.10.2015 GB 201518663
(43) Date of publication of application: 26.04.2017
(73) Proprietor: Ford Global Technologies, LLC, Dearborn, MI 48126 (US)
(72) Inventor: Gregory, Jonathan, Colchester, Essex CO3 9ER (GB)
(74) Representative: Dörfler, Thomas

(56) References cited:
- DE-A1-102014 105 420
- GB-A- 2 430 817
- US-A- 5 748 473
- US-A1- 2010 312 369
- US-A1- 2014 172 238
- US-A1- 2014 343 796
- US-A1- 2015 045 984

## Description

This invention relates to motor vehicles and in particular to an entertainment system of a motor vehicle.

It is known to provide a motor vehicle with an entertainment system (ICE) that allows audio content from a playlist to be played from at least one of a universal serial bus storage device (USB), a transportable media such as a compact disc, a hard drive of a entertainment unit forming part of an entertainment system or audio to be played from a radio station.

However, current motor vehicles require the driver or a passenger to manually select which radio station should be selected or which playlist should be played. If there are a number of different options available to a driver then this can be distracting particularly when the motor vehicle is in motion.

It is an object of this invention to provide a method of controlling a motor vehicle entertainment system that operates in a substantially autonomous manner with little driver input.

According to a first aspect of the invention there is provided a method comprising establishing the identity of one or more front seat occupants of the vehicle using respective seat fore-aft position sensors and seat mass sensors and selecting an audio output based upon the established identity of the one or more vehicle occupants characterised in that, when there is a single occupant in the motor vehicle in the form of a driver, a playlist associated with the driver is automatically selected and, when there are several occupants in the motor vehicle, then several playlists based upon the identities of the respective front seat occupants are offered for selection by the occupants based upon the identity of the respective front seat occupants.

Selecting an audio output based upon the identity of the one or more vehicle occupants may comprise providing for one of the identified occupants of the vehicle a customised playlist specific to the or each identified occupant.

Selecting an audio output based upon the identity of the one or more vehicle occupants may comprise automatically selecting for one of the identified occupants of the vehicle a customised playlist specific to that occupant and producing an audio output based upon the customised playlist.

Selecting an audio output based upon the identity of the one or more vehicle occupants may comprise automatically selecting for one of the identified occupants of the motor vehicle a preferred radio station on a radio based upon previous use of the radio by the identified occupant and producing an audio output from the automatically selected radio station.

The method may further comprise saving the seat position and weight characteristics of the occupant of the seat as an occupant identity reference.

The occupant identity reference may be saved in the at least one memory device of the entertainment unit.

The method may further comprise selecting from a number of saved playlists a customised playlist based upon the identity of the driver and providing the driver of the vehicle with the customised playlist.

Alternatively, the method may comprise automatically selecting from a number of saved playlists a customised playlist based upon the identity of the driver and automatically providing an audio output from the automatically selected customised playlist.

The customised playlists may be saved in the at least one memory device.

According to a second aspect of the invention there is provided an entertainment system of a motor vehicle having an entertainment unit including at least one memory device arranged to provide an audio output to at least one audio output device wherein the entertainment unit includes a human machine interface and a programmable device arranged to establish based upon one or more sensor inputs the identity of one or more front seat occupants of the vehicle and select an audio output based upon the identified vehicle occupants, the sensor inputs comprising an input from a seat fore-aft position sensor associated with each front seat of the vehicle and an input from a seat mass sensor associated with the same front seat of the vehicle and the programmable device is arranged to use the inputs from seat fore-aft position sensor and the seat mass sensor to establish characteristics of an occupant of the respective seat characterised in that, when there is a single occupant in the motor vehicle in the form of a driver, a playlist associated with the driver is automatically selected and, when there are several occupants in the motor vehicle, then several playlists based upon the identities of the respective front seat occupants are offered for selection by the occupants using the human machine interface based upon the identity of the respective front seat occupants.

The seat position and weight characteristics of the occupant of the seat may be saved as an occupant identity reference in the at least one memory device of the entertainment unit.

According to a third aspect of the invention there is provided a motor vehicle characterised in that the motor vehicle has an entertainment system constructed in accordance with said second aspect of the invention.

The invention will now be described by way of example with reference to the accompanying drawing of which:-
Fig.1 is a schematic plan view of a motor vehicle in accordance with a third aspect of the invention having an entertainment system constructed in accordance with a second aspect of the invention;
Fig.2 is a block diagram showing the main components of the entertainment system shown in Fig.1; and
Fig.3 is a high level flow chart of a method of controlling a motor vehicle entertainment system in accordance with a first aspect of the invention.

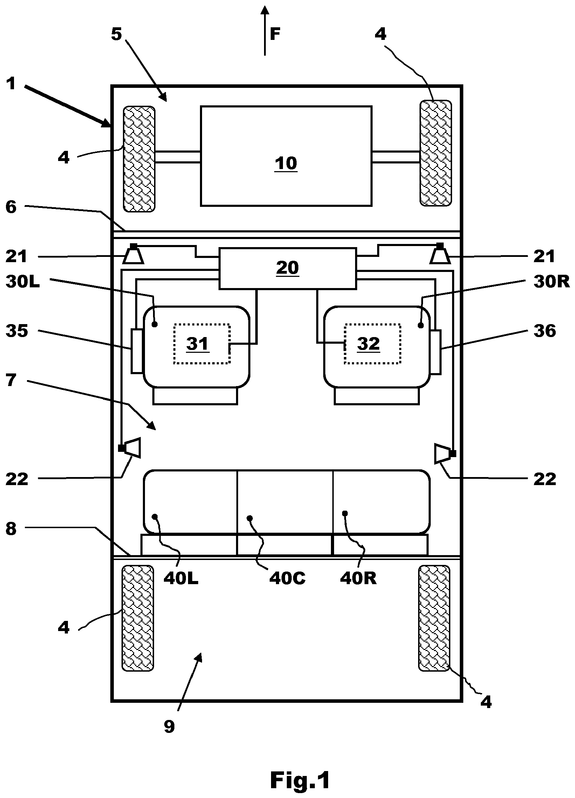

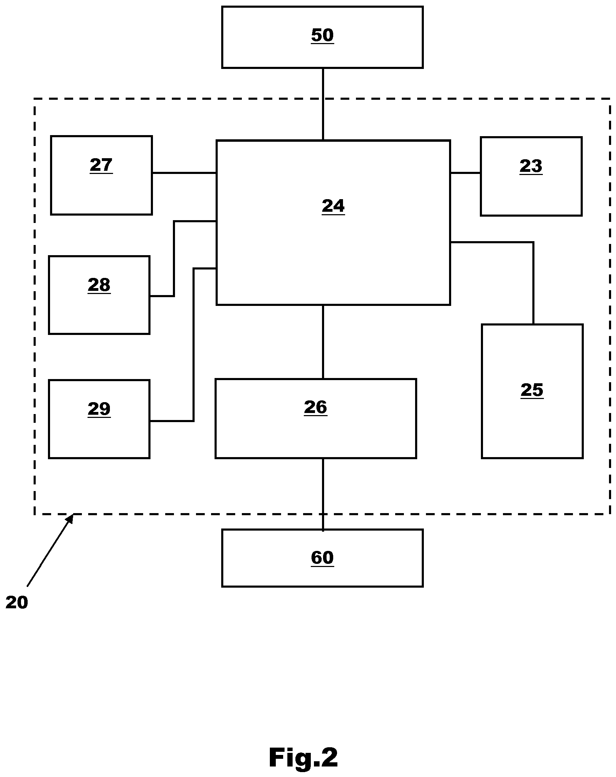

Referring to Figs.1 and 2 there is shown a motor vehicle 1 having four road wheels 4, an engine compartment 5, a passenger compartment 7 separated from the engine compartment 5 by a front firewall 6, a luggage compartment 9 separated from the passenger compartment 7 by a rear firewall 8, left and right front seats 30L, 30R mounted in the passenger compartment 7 for use by occupants of the motor vehicle 1, a row of rear seats 40L, 40C, 40R mounted in the passenger compartment 7 for use by occupants of the motor vehicle 1 and an entertainment system including an entertainment unit 20 and a number of speaker 21, 22.

An engine and multispeed transmission assembly 10 is mounted in the engine compartment 5 and is arranged to drive the front road wheels 4 of the motor vehicle 1. A forward direction of travel of the motor vehicle 1 is indicated by the arrow 'F' on Fig.1

The motor vehicle entertainment system is arranged to selectively provide audio to occupants of the passenger compartment 7.

The entertainment system comprises the entertainment unit 20 and a number of audio output devices in the form of front and rear speakers 21 and 22 respectively. It will be appreciated that there could be more or less speakers than the four shown in Fig.1.

The entertainment unit 20 comprises in the case of this example a programmable device in the form of a central processing unit 24, a human machine interface 23 (HMI 23) a memory device 25, an amplifier 26, an transportable media input unit 27 for accepting a transportable media such as a compact disc (not shown), a radio 28 and a universal serial bus socket 29 for accepting a transportable USB device (not shown). The HMI 23, the memory device 25, the amplifier 26, the media input unit 27, the radio 28 and the universal serial bus socket 29 are all operatively connected to the central processor unit 24 which manages the flow of information, signals and data between the various components of the entertainment unit 20 and is programmed to perform a number of tasks as described hereinafter. It will be appreciated that although the entertainment unit 20 is shown as a single unit in Figs.1 and 2 it could in practice comprise of several units or modules that are operatively linked together.

It will further be appreciated that the memory device 25 can be in the form of a solid state memory device, a hard drive storage device or a combination of both types of memory device. In the case where the memory device is a solid state device there may be a number of separate solid state memory devices that form in combination the memory device 25 or the memory device 25 could comprise a single large memory device.

Irrespective of the type of memory used to form the memory device 25, the memory device 25 is arranged to store a number of customised playlists specific to previously identified vehicle occupants referenced by vehicle occupant.

The memory device 25 in this case also retains data (occupant identity references) relating to various previous frequent users of the motor vehicle from which the identity of an occupant can be inferred. The occupant identity references are used to decide which of the various customised playlists is relevant to the current occupancy of the motor vehicle 1.

The central control unit 24 is arranged to receive an input 50 indicative of the occupancy of the motor vehicle 1 that is used to evaluate the most suitable playlist for the current occupancy of the motor vehicle 1.

In the case of this example the input 50 comprises signals from a number of seat sensors 31, 32, 35 and 36.

The front left hand seat 30L is in the case of this example a seat for a driver of the motor vehicle 1 and has a mass sensor 31 to sense the weight of an occupant of the seat 30L and a seat position sensor in the form of a seat track position sensor 35 to sense the fore-aft position of the seat 30L.

The front right hand passenger seat 30R has a mass sensor 31 to sense the weight of an occupant of the seat 30R and a seat position sensor in the form of a seat track position sensor 36 to sense the fore-aft position of the seat 30R.

The amplifier 26 is connected to an output 60 that in the case of this example comprises the front and rear speakers 21 and 22.

The central control unit 24 is operable to automatically select a customised playlist based upon occupancy from the customised playlists stored in the memory device 25 unless an occupant has manually selected another input source by, for example, selecting a radio station, inserting a compact disc into the media input device 27 or inserting a USB device into the universal serial bus socket 29. Any of these manual actions by an occupant will cause the entertainment unit 20 to provide the occupants of the motor vehicle 1 with an audio output based upon the manually selected input source.

The entertainment unit 21 is also operable to prompt to determine whether the audio content from the manually selected input source should be saved in the memory device 25 in one of the customised playlists based upon the identity of the occupant who has selected the audio source.

In the case where the radio has been manually selected, a reference indicating the selected station is saved in the memory device along with a reference indicating the identity of the occupant.

The storage of such information is referenced by current occupancy and so, for example, if only a driver is present in the motor vehicle 1 then it will be referenced as a specific driver (driver identity) relevant playlist or radio selection. The identity of the driver is established or inferred based upon the weight of the driver sensed by load sensor 31 and the fore-aft position of the seat 30L as sensed by the seat position sensor 35.

If there is a driver and a front seat passenger then the entertainment unit 20 provides a prompt asking whether the audio is to be referenced based upon the driver or the front seat passenger. The response is input to the entertainment unit 20 by one of the occupants via the HMI 23. If the audio is to be reference based upon the current passenger then the identity of the passenger is established or inferred based upon the weight of the passenger sensed by the mass sensor 32 and the fore-aft position of the seat 30R as sensed by the seat position sensor 36.

It will be appreciated that the above description is based upon a left hand drive vehicle but the same approach can be used if the vehicle is a right hand drive vehicle.

If there is no manual selection of an input source the entertainment unit 20 is operable to automatically provide the occupants with an audio output based upon the occupancy of the motor vehicle 1.

If only a driver is present in the motor vehicle 1 then the customised playlist or radio station automatically selected by the entertainment unit 20 will be one that has previously been saved referenced against the current driver. The identity of the driver is established or inferred as before based upon the weight of the driver sensed by the mass sensor 31 and the fore-aft position of the seat 30L sensed by the seat position sensor 35 along with the occupant identity references saved in the memory device 25.

The selected customised playlist or preferred radio station can either be automatically provided as an output to the speakers 21, 22 or the entertainment unit 20 can provide a prompt asking whether audio from the playlist or from the radio station is to be output. In some embodiments the entertainment unit has radio and saved music modes and when the entertainment is in the radio mode audio is provided to the speakers 21, 22 from the entertainment unit from the preferred radio station and when the entertainment is in the saved music mode the customised playlist is provided to the speakers 21, 22 or the occupants can be provided with a prompt to select one or more items from the customised playlist.

If there is a driver and a front seat passenger then the entertainment unit 20 provides a prompt asking whether the audio is to be selected based upon the driver or the front seat passenger. The response is input to the entertainment unit 20 by one of the occupants via the HMI 23. If the audio is to be selected based upon the current passenger, the identity of the passenger is established or inferred based upon the weight of the passenger sensed by the mass sensor 32 and the fore-aft position of the seat 30R as sensed by the seat position sensor 36.

It will be appreciated that the above description is based upon a left hand drive vehicle but the same approach cab be used if the vehicle is a right hand drive vehicle.

In some cases a composite playlist comprised of items from a customised playlist for the driver and a customised playlist for the passenger can be provided from which an audio output can be manually selected or in some cases automatically selected.

It will be appreciated that a key aspect of the invention is the identifying and saving of details regarding the various users of the motor vehicle 1 that can be used to select an appropriate customised playlist containing audio specific to the occupant currently requiring an audio output.

In order to achieve this, various customised playlists are saved each of which is specific to a particular user and which are given a unique identity based upon the weight of the occupant and the seat position chosen when the occupant occupies one of the front seats 30L, 30R.

Table 1 below provides one non-limiting example of the manner in which various occupants differ enabling their identities to be inferred based upon seat position and weight. It will be appreciated that there could be more than five occupant identities saved for reference by the entertainment unit 20.

In the example given below in Table 1 the furthest forward position of each of the front seats 30L, 30R is assigned a value of zero as part of the calibration of the seat position sensors 35, 36. The value of seat position provided in Table 1 is a calibrated value indicative of the distance as measured by one of the seat position sensors 35, 36 that the respective front seat 30R, 30L is displaced rearwardly from its respective zero position.

**Table 1**

| Occupant Identity Reference | Weight kg | Seat Position |
|---|---|---|
| A | 80 | 250 |
| B | 60 | 150 |
| C | 65 | 150 |
| D | 60 | 100 |
| E | 45 | 0 |

It will be noted that the occupants B and D weigh the same but they can be differentiated between because their chosen seat positions differ. Similarly, the occupants B and C have the same chosen seat positions but they can be differentiated between because their weights are different.

Therefore unique identities can be assigned for various occupants of the motor vehicle 1 over time for use in controlling the entertainment system.

Each of the customised playlists is assigned one of the occupant identity reference values and so when an occupant matches the weight and seat position characteristics given in Table 1 the entertainment unit 20 knows which customised playlist to select.

The audio output from the speakers 21, 22 is automatically selected based upon the identities of the occupants of the front seats 30L, 30R and in most cases would favour the identity of the driver and so the customised playlist and radio selection of the driver would automatically be selected. However, as previously referred to, in some embodiments where there is common audio content in the respective playlists of the driver and the front seat passenger a composite playlist comprised of common audio content could be automatically selected or the occupants can be given the opportunity to choose between the driver and the passenger customised playlists.

Therefore, in summary, in accordance with this invention a motor vehicle entertainment system is operable to determine the front seat occupants using front seat position and mass sensors and use this information to select appropriate audio output.

Using a system constructed in accordance with this invention it is possible to create playlists quickly and easily within an entertainment unit of the entertainment system and save them for future use. The entertainment unit is operable to save multiple playlists and save them as customised playlists referenced by the identity of the individual who created them.

The entertainment unit is preferably able to recognise when a new audio item (song) has been added to a USB device and provide the option of adding the item to a playlist of a known occupant.

Also, if an audio item is repeatedly played and is not on a playlist the entertainment unit will automatically save it to a playlist of a known occupant.

The entertainment unit may further be operable to recognise a relationship between an occupant and a radio station and offer the selection of the radio station as an option.

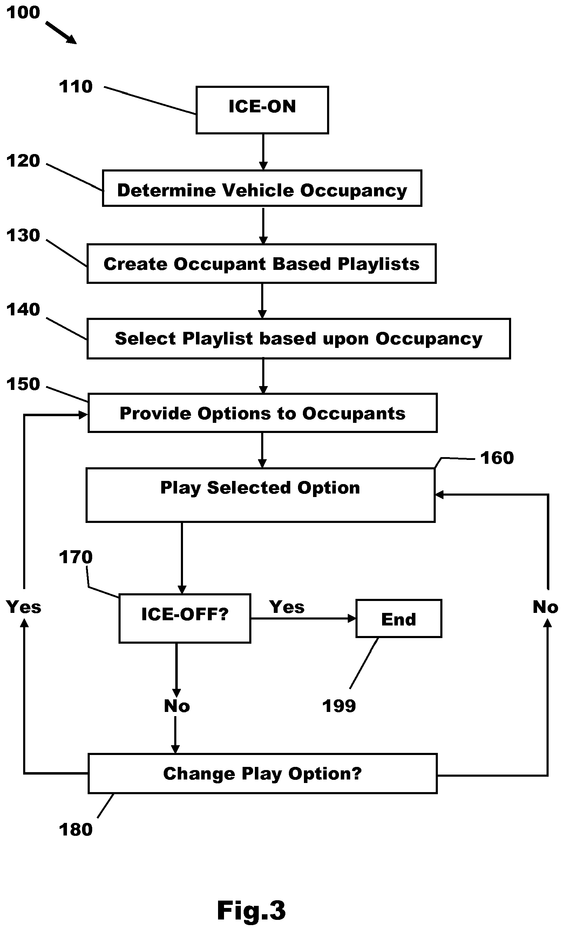

Referring now to Fig.3 there is shown a high level flow chart of a method 100 of controlling a motor vehicle entertainment system in accordance with this invention that could be embodied as a number of executable steps in a programmable device such as the central control unit 24.

The method commences in box 110 where an entertainment system including an entertainment unit such as the entertainment unit 20 is switched on.

The method then advances to box 120 in which the occupancy of the motor vehicle is established based upon the use of one or more seat sensors. In a basic system the fore-aft position of a seat for a driver is sensed using a seat position sensor and mass sensors are provide in both of the front seats. It will be appreciated that such mass sensors are often provided for use by a safety system of the motor vehicle to determine whether an airbag should be maintained in a de-activated or active state.

Although it would be possible to use only a seat position sensor or a mass sensor to establish the identity of a seat occupant this can produce errors in occupant recognition because several occupants may be of similar weight or use a similar seat position. Therefore it is desirable, that both occupant weight sensing and fore-aft seat position sensors are provide for both of the front seats. Based upon the inputs received from the seat sensors an occupant identity is inferred.

Moving on from box 120 to box 130 customised playlists based upon occupants are created and saved on-board a motor vehicle such as the motor vehicle 1 in a memory device such as the memory device 25.

It will be appreciated that the action referred to in box 130 can take place at any time during a period when the entertainment unit is switched on. So, for example, when a particular audio item (song) is played by a particular occupant a number of times it will automatically be saved to the on-board memory of the entertainment unit 20 or a prompt can be provided asking whether such an audio item should be saved. As yet another example if a music album is played via a USB device or a compact disc player of the entertainment unit then the album will, provided such saving is legal in the country of use, be automatically saved to the on-board memory of the entertainment unit or a prompt can be provided asking whether the album should be saved. As yet a further alternative, when a particular radio station is selected by a particular occupant a number of times it can automatically be saved to the on-board memory or a prompt can be provided asking whether such a radio station should be saved.

In all cases the respective occupant has to be first identified so that the respective playlist or radio station can be indexed or associated with that occupant.

Moving on to box 140 the identity of the occupant is then used to select either a customised playlist or a preferred radio station for the identified occupant depending upon the mode that the entertainment unit 20 is in. If the entertainment unit 20 is in a radio mode then the preferred radio station is automatically selected and an audio output from that radio station is provided to the speakers 21, 22. If the entertainment unit 20 is in a saved music mode then the relevant customised playlist is selected either automatically or via a prompt to the occupants.

Then as indicated in box 150, in a case where more than one occupant has been identified, the occupants will be offered the option to choose from a number of customised playlists chosen to reflect the current occupancy of the motor vehicle.

In a case where there is a single occupant in the motor vehicle (a driver), a playlist associated with the driver will automatically be selected. The automatic selection of a preferred radio station for the driver may be provided or the occupant may be given the opportunity to select from radio or saved audio content on the customised playlist.

In a case where there are several occupants then several playlists based upon the identities of the respective front seat occupants will be offered for selection by the occupants based upon the identity of the respective front seat occupants.

In some cases the playlist selected may be the playlist associated with the driver of the motor vehicle and in other cases a composite playlist comprised of the playlist of the driver and the front seat passenger can be offered as options for selection.

Moving on from box 150 when a playlist or radio station has been selected it is played by the entertainment unit and then in box 170 it is checked whether the entertainment unit is still switched on. If the entertainment unit is still on then the selected audio output will continue to be played and the method advances to box 180 where a prompt is provided to a user of the entertainment system asking whether it is required to change the play option. That is to say, if there was the possibility of more than one playlist offered in box 150, does the user now wish to change the selection made in box 150.

If the answer to the question posed in box 180 is 'Yes' the method returns to box 150 and otherwise it returns to box 160 and the currently selected audio output continues to be played.

Referring back to box 170 if the entertainment unit is switched off at any time then the method ends in box 199.

Therefore in summary, the method automatically provides for selection either one or more playlists chosen to reflect the tastes of the current identified occupants, a playlist associated with the driver or automatically selects a playlist based upon the current occupancy of the motor vehicle.

It will be appreciated by those skilled in the art that although the invention has been described by way of example with reference to one or more embodiments it is not limited to the disclosed embodiments and that alternative embodiments could be constructed without departing from the scope of the invention as defined by the appended claims.

## Claims

1. A method of controlling an entertainment system of a motor vehicle (10) including an entertainment unit (20) having at least one memory device (25), the method comprising establishing the identity of one or more front seat occupants of the vehicle (1) using respective seat fore-aft position sensors (35; 36) and seat mass sensors (31; 32) and selecting an audio output based upon the established identity of the one or more vehicle occupants **characterised in that**, when there is a single occupant in the motor vehicle (1) in the form of a driver, a playlist associated with the driver is automatically selected and, when there are several occupants in the motor vehicle (1), then several playlists based upon the identities of the respective front seat occupants are offered for selection by the occupants based upon the identity of the respective front seat occupants.

2. A method as claimed in claim 1 wherein selecting an audio output based upon the identity of the one or more vehicle occupants comprises providing a customised playlist specific to the or each identified occupant.

3. A method as claimed in claim 1 or in claim 2 wherein the method further comprises saving the seat position and weight characteristics of the occupant of the seat (30L; 30R) as an occupant identity reference.

4. A method as claimed in claim 2 wherein the customised playlists are saved in the at least one memory device (25) of the entertainment unit (20).

5. An entertainment system of a motor vehicle (1) having an entertainment unit (20) including at least one memory device (25) arranged to provide an audio output to at least one audio output device (60) wherein the entertainment unit (20) includes a human machine interface (23) and a programmable device (24) arranged to establish based upon one or more sensor inputs (50) the identity of one or more front seat occupants of the vehicle (1) and select an audio output based upon the identified vehicle occupants, the sensor inputs (50) comprising an input from a seat fore-aft position sensor (35; 36) associated with each front seat (30L; 30R) of the vehicle (1) and an input from a seat mass sensor (31; 32) associated with the same front seat (30L; 30R) of the vehicle (1) and the programmable device (24) is arranged to use the inputs from seat fore-aft position sensor (35; 36) and the seat mass sensor (31; 32) to establish characteristics of an occupant of the respective seat (30L; 30R) **characterised in that**, when there is a single occupant in the motor vehicle (1) in the form of a driver, a playlist associated with the driver is automatically selected and, when there are several occupants in the motor vehicle (1), then several playlists based upon the identities of the respective front seat occupants are offered for selection by the occupants using the human machine interface (23) based upon the identity of the respective front seat occupants.

6. An entertainment system as claimed in claim 5 wherein the seat position and weight characteristics of the occupant of the seat (30L; 30R) are saved as an occupant identity reference in the at least one memory device (25) of the entertainment unit (20).

7. A motor vehicle (1) **characterised in that** the motor vehicle (1) has an entertainment system as claimed in claim 5 or in claim 6.

## Patentansprüche

1. Verfahren der Steuerung eines Entertainment-Systems eines Kraftfahrzeugs (10), das eine Entertainment-Einheit (20) mit mindestens einer Speichervorrichtung (25) aufweist, wobei das Verfahren das Festlegen der Identität eines oder mehrerer Vordersitzinsassen des Fahrzeugs (1) mithilfe von jeweiligen Sitz-Längspositionssensoren (35; 36) und Sitzmassesensoren (31; 32) und das Auswählen einer Audioausgabe basierend auf der festgestellten Identität des einen oder mehrerer Fahrzeuginsassen umfasst, **dadurch gekennzeichnet, dass**, wenn sich ein einzelner Insasse in der Form eines Fahrers in dem Kraftfahrzeug (1) befindet, eine mit dem Fahrer verbundene Playliste automatisch ausgewählt wird und, wenn sich mehrere Insassen in dem Kraftfahrzeug (1) befinden, mehrere Playlisten basierend auf den Identitäten der jeweiligen Vordersitzinsassen zur Auswahl durch die Insassen basierend auf der Identität der jeweiligen Vordersitzinsassen angeboten werden.

2. Verfahren nach Anspruch 1, wobei das Auswählen einer Audioausgabe basierend auf der Identität des einen oder der mehreren Fahrzeuginsassen das Bereitstellen einer angepassten Playliste speziell für den einen oder jeden identifizierten Insassen umfasst.

3. Verfahren nach Anspruch 1 oder Anspruch 2, wobei das Verfahren ferner das Speichern der Sitzposition und der Gewichtseigenschaften des Insassen des Sitzes (30L; 30R) als Insassen-Identitätsreferenz umfasst.

4. Verfahren nach Anspruch 2, wobei die angepassten Playlisten in der mindestens einen Speichervorrichtung (25) der Entertainment-Einheit (20) gespeichert werden.

5. Entertainment-System eines Kraftfahrzeugs (1) mit einer Entertainment-Einheit (20), die mindestens eine Speichervorrichtung (25) aufweist, die angeordnet ist, eine Audioausgabe zu mindestens einem Audioausgabegerät (60) zu liefern, wobei die Entertainment-Einheit (20) eine Mensch-Maschine-Schnittstelle (23) und ein programmierbares Gerät (24) aufweist, die angeordnet sind, auf der Basis einer oder mehrerer Sensoreingaben (50) die Identität eines oder mehrerer Vordersitzinsassen des Fahrzeugs (1) festzulegen und eine Audioausgabe auf der Basis der identifizierten Fahrzeuginsassen auszuwählen, wobei die Sensoreingaben (50) eine Eingabe von einem Sitz-Längspositionssensor (35; 36), der mit dem jeweiligen Vordersitz (30L; 30R) des Fahrzeugs (1) verbunden ist, und eine Eingabe von einem Sitzmassensensor (31; 32), der mit dem gleichen Vordersitz (30L; 30R) des Fahrzeugs (1) verbunden ist, umfassen, und das programmierbare Gerät (24) angeordnet ist, die Eingaben von dem Sitz-Längspositionssensor (35; 36) und dem Sitzmassensensor (31; 32) zu nutzen, um die Eigenschaften eines Insassen des entsprechenden Sitzes (30L; 30R) festzulegen, die **dadurch gekennzeichnet sind, dass**, wenn sich ein einzelner Insasse in der Form des Fahrers in dem Kraftfahrzeug (1) befindet, eine mit dem Fahrer verbundene Playliste automatisch ausgewählt wird und, wenn sich mehrere Insassen in dem Kraftfahrzeug (1) befinden, mehrere Playlisten basierend auf den Identitäten der jeweiligen Vordersitzinsassen zur Auswahl durch die Insassen mithilfe der Mensch-Maschine-Schnittstelle (23) auf der Basis der Identität der jeweiligen Vordersitzinsassen angeboten werden.

6. Entertainment-System nach Anspruch 5, wobei die Sitzpositions- und Gewichtseigenschaften des Insassen des Sitzes (30L; 30R) als Insassenidentitätsreferenz in der mindestens einen Speichervorrichtung (25) der Entertainment-Einheit (20) gespeichert werden.

7. Kraftfahrzeug (1), das **dadurch gekennzeichnet ist, dass** das Kraftfahrzeug (1) ein Entertainment-System nach Anspruch 5 oder Anspruch 6 aufweist.

## Revendications

1. Procédé de commande d'un système de divertissement d'un véhicule à moteur (10) comprenant une unité de divertissement (20) ayant au moins un dispositif de mémoire (25), le procédé consistant à établir l'identité d'un ou de plusieurs occupants de siège avant du véhicule (1) à l'aide de capteurs de position avant-arrière de siège respectifs (35 ; 36) et de capteurs de masse de siège (31 ; 32) et à sélectionner une sortie audio basée sur l'identité établie du ou des occupants du véhicule, **caractérisé en ce que**, lorsqu'il y a un seul occupant dans le véhicule à moteur (1) sous la forme d'un conducteur, une liste d'écoute associée au conducteur est automatiquement sélectionnée et, lorsqu'il y a plusieurs occupants dans le véhicule à moteur (1), alors plusieurs listes d'écoute basées sur les identités des occupants de siège avant respectifs sont offertes pour une sélection par les occupants en se basant sur l'identité des occupants de siège avant respectifs.

2. Procédé selon la revendication 1, dans lequel la sélection d'une sortie audio basée sur l'identité du ou des occupants du véhicule consiste à fournir une liste d'écoute personnalisée spécifique à l'occupant identifié ou à chaque occupant identifié.

3. Procédé selon la revendication 1 ou selon la revendication 2, dans lequel le procédé consiste en outre à sauvegarder les caractéristiques de position de siège et de poids de l'occupant du siège (30L ; 30R) en tant que référence d'identité d'occupant.

4. Procédé selon la revendication 2, dans lequel les listes d'écoute personnalisées sont sauvegardées dans la ou les dispositifs de mémoire (25) de l'unité de divertissement (20).

5. Système de divertissement d'un véhicule à moteur (1) ayant une unité de divertissement (20) comprenant au moins un dispositif de mémoire (25) conçu pour fournir une sortie audio à au moins un dispositif de sortie audio (60), dans lequel l'unité de divertissement (20) comprend une interface homme-machine (23) et un dispositif programmable (24) conçu pour établir, en se basant sur une ou plusieurs entrées de capteur (50), l'identité d'un ou de plusieurs occupants de siège avant du véhicule (1) pour sélectionner une sortie audio basée sur les occupants de véhicule identifiés, les entrées de capteur (50) comprenant une entrée provenant en provenance d'un capteur de position avant-arrière de siège (35 ; 36) associé à chaque siège avant (30L ; 30R) du véhicule (1) et une entrée en provenance d'un capteur de masse de siège (31 ; 32) associé au même siège avant (30L ; 30R) du véhicule (1) et le dispositif programmable (24) est conçu pour utiliser les entrées en provenance d'un capteur de position avant-arrière de siège (35 ; 36) et du capteur de masse de siège (31 ; 32) pour établir des caractéristiques d'un occupant du siège respectif (30L ; 30R), **caractérisé en ce que**, lorsqu'il y a un seul occupant dans le véhicule à moteur (1) sous la forme d'un conducteur, une liste d'écoute associée au conducteur est automatiquement sélectionnée et, lorsqu'il y a plusieurs occupants dans le véhicule à moteur (1), alors plusieurs listes d'écoute basées sur les identités des occupants de siège avant respectifs sont offertes pour une sélection par les occupants à l'aide de l'interface homme-machine (23) en se basant sur l'identité des occupants de siège avant respectifs.

6. Système de divertissement selon la revendication 5, dans lequel les caractéristiques de position de siège et de poids de l'occupant du siège (30L ; 30R) sont sauvegardées en tant que référence d'identité d'occupant dans le ou les dispositifs de mémoire (25) de l'unité de divertissement (20).

7. Véhicule à moteur (1) **caractérisé en ce que** le véhicule à moteur (1) comporte un système de divertissement selon la revendication 5 ou selon la revendication 6.
